# EUROPÄISCHE PATENTSCHRIFT

(11) **EP 2 390 031 B1**
(45) Veröffentlichungstag und Bekanntmachung des Hinweises auf die Patenterteilung: **06.04.2016**
(21) Anmeldenummer: 11165792.0
(22) Anmeldetag: 12.05.2011
(51) Int. Cl.: B23C 3/35, E05B 19/00

(54) **Verfahren zum Profilieren der Breitseiten eines Wendeflachschlüssels sowie Wendeflachschlüssel**
Method for profiling broad sides of a flat reversible key and flat reversible key
Procédé de profilage des faces larges d'une clé plate réversible et clé plate réversible

(30) Priorität: 31.05.2010 DE 102010017165
(43) Veröffentlichungstag der Anmeldung: 30.11.2011
(73) Patentinhaber: C. Ed. Schulte Gesellschaft mit beschränkter Haftung Zylinderschlossfabrik, 42551 Velbert (DE)
(72) Erfinder: Piotrowski, Theo, 50169, Kerpen (DE); Reine, Michael, 45145, Essen (DE); Wallberg, Thomas, 42489, Wülfrath (DE)
(74) Vertreter: Grundmann, Dirk

(56) Entgegenhaltungen:
- EP-A1- 0 616 100
- DE-A1-102007 057 407
- US-A- 4 416 128
- US-A- 5 908 273
- US-A1- 2007 028 658

## Beschreibung

Die Erfindung betrifft ein Verfahren zum Profilieren der Breitseiten eines Wendeflachschlüssels.

Die Erfindung betrifft darüber hinaus einen Wendeflachschlüssel.

Flachschlüssel, die nach einem derartigen Verfahren hergestellt werden, besitzen einen länglichen Schlüsselschaft, dessen Breitseiten mit sich abwechselnden Nuten und Rippen profiliert sind. Die Rippen und Nuten verlaufen in Längserstreckungsrichtung des Schlüsselschaftes. Auf einer Seite besitzt der Schlüsselschaft eine Schlüsselspitze, mit der der Schlüssel in einen im Wesentlichen komplementär zum Schlüsselprofil profilierten Schlüsselkanal eines Schließzylinders eingesteckt werden kann. Auf der der Schlüsselspitze gegenüberliegenden Seite entspringt der Schlüsselschaft einer Reide. Derartige Flachschlüssel besitzen zwei Schmalseiten und zwei Breitseiten. Die Breitseiten sind bezogen auf eine Längsmittellinie im Querschnitt durch den Schlüsselschaft punktsymmetrisch ausgestaltet, so dass der Wendeflachschlüssel in zwei Wendestellungen in einen Schlüsselkanal eines Schließzylinders eingesteckt werden kann. Jede der beiden Breitseiten ist somit identisch mit Nuten und Rippen profiliert, die parallel zur Schlüsselmittellinie verlaufen. Der Schlüsselkanal bildet komplementäre Nuten bzw. Rippen aus, so dass in diesem Bereich Nuten und Rippen des Schlüssels bzw. der Wandung des Schlüsselkanals führend ineinander greifen. Der die Einschnitte aufweisende Abschnitt des Schlüsselschaftes ist ebenfalls mit Rippen und Nuten versehen, die unterschiedliche Rippenhöhen bzw. Nuttiefen aufweisen können, um so Schlüssel bzw. Schließsysteme zu individualisieren. Durch Hinzunahme oder Wegnahme von Nuten bzw. Rippen werden Schließhierarchien aufgebaut.

Ein gattungsgemäßes Verfahren zur Fertigung eines derartigen Schlüssels zeigt die DE 10 2007 057 407 A1. Der Schlüsselrohling wird dort zwischen zwei Spannbacken eingespannt, so dass eine der beiden Breitseiten frei liegt. Die Profilierung der Breitseiten erfolgt mittels eines Fräsers, der auf seiner Umfangsfläche Fräszähne aufweist, die ein zu den erzeugenden Profilnuten bzw. Profilrippen des Schlüsselschaftes komplementäres Profil besitzen. Der Schlüssel wird in Erstreckungsrichtung des Schaftes vorgeschoben. Die Achsen der von einem Elektromotor drehangetriebenen Fräser verlaufen parallel zur Schlüsselbreitseitenebene. Dies bedeutet, dass sie senkrecht zur Flächennormalen der Breitseitenebene verlaufen.

Eine ähnliche Vorrichtung, mit der das gattungsgemäße Verfahren durchführbar ist, zeigt die DE 100 49 662 C2. Auch hier werden mittels eines Fräsers, der um eine parallel zur Schlüsselbreitseitenebene verlaufende Drehachse drehangetrieben wird, parallel zur Schlüsselerstreckungsrichtung verlaufende Nuten und Rippen gefräst. Mit diesem Verfahren können nur solche Nuten bzw. Rippen gefräst werden, deren Nutwände bzw. Rippenwände einen positiven Winkel zur Schlüsselnormalen besitzen. Die Flankenwinkel der Fräszahnrippen sind größer als 90°. Demzufolge sind auch die Flankenwinkel der Nuten größer als 90°. Üblicherweise liegt die Größe des Freiwinkels zur Senkrechten bei 3°, um schädliche Reibungen der Fräszähne an den Nutwänden zu vermeiden.

Die DE 694 21 093 T2 beschreibt die Fertigung von hinterschnittenen Profilnuten an einem Schlüsselrohling, wobei Schneidscheiben verwendet werden, die um geneigt zur Schlüsselbreitseitenebene verlaufende Drehachsen angetrieben werden.

Aus der DE 35 42 008 ist es bekannt, hinterschnittene Nuten durch Aufbringen eines Plättchens auf der Schlüsselbreitseite zu erzeugen.

Die DE 33 14 511 A1 beschreibt einen Flachschlüssel, bei dem auf den beiden sich gegenüberliegenden Breitseiten jeweils Nuten eingeschnitten sind, die eine hinterschnittene Nutwandung besitzen.

Aus der DE 10 2005 036 113 A1 ist ebenfalls ein Schlüsselprofil bekannt, bei dem Nutwände der Profilnuten hinterschnitten sind. Auch hier müssen die hinterschnittenen Nuten in einem gesonderten Arbeitsgang mit Hilfe von schräggestellten Schneidscheiben gefräst werden.

EP 0 616 100 A1 offenbart einen Wendeflachschlüssel mit den Merkmalen des Oberbegriffs von Anspruch 3 und implizit ein Verfahren zum Profilieren der Breitseiten eines Wendeflachschlüssels.

Der Erfindung liegt die Aufgabe zugrunde, ein Verfahren zur Fertigung von Schlüsselprofilen mit zumindest einer hinterschnittenen Nutwand anzugeben, bei dem jede Breitseite in einem einzigen Arbeitsgang profiliert werden kann. Gelöst wird die Aufgabe durch die in den Ansprüchen angegebene Erfindung. Zunächst und im Wesentlichen ist vorgesehen, dass die Fräserwellenachse zur Längsmittelebene des Schlüssels um einen Neigungswinkel geneigt ist. Dieser Neigungswinkel definiert den maximal möglichen Hinterschneidungswinkel der mindestens einen hinterschnittenen Nut. Die Rippen bzw. Nuten der Fräszähne entspringen dabei einer zumindest virtuellen Kegelstumpfmantelfläche mit einem dem Neigungswinkel entsprechenden Kegelwinkel. Diese Kegelstumpfmantelfläche liegt im Bereich des Fräszahneingriffs parallel zur Längsmittelebene bzw. Breitseitenebene des Schlüsselrohlings. Zumindest eine Nutflanke eines der Fräszähne hat einen Flankenwinkel zur Drehachse des Fräsers, der derart gering ist, dass diese Fräszahnflanke eine hinterschnittene Nutwand erzeugt. Bei dem erfindungsgemäßen Verfahren wird der unprofilierte Schlüssel zunächst zwischen zwei Spannbacken eingespannt, so dass eine der beiden zueinander parallelen Breitseiten des Schlüsselrohlings frei liegt. Die andere Breitseite des Schlüsselrohlings stützt sich auf einer Stützfläche, die zwischen den beiden Spannbacken liegt, ab. Bevorzugt greifen die Spannbacken an den beiden sich gegenüberliegenden Längsschmalseiten des Schlüsselschaftes, also an Brust und Rücken des Rohlings, an. Die Drehachse des Fräsers, mit dem die erste Breitseite des Schlüsselrohlings profiliert wird, verläuft geneigt zur Schlüsselbreitseite. Aus der im Wesentlichen auf einer Kegelmantelfläche verlaufenden Umfangsfläche des Fräskopfes ragen die Fräsrippen von den Fräszähnen ab. Durch eine Zustellung des Fräskopfes quer zur Fräserachse werden die Fräszähne in Eingriff in die zu bearbeitende Breitseite des Schlüsselrohlings gebracht. Anschließend wird entweder der Fräskopf oder der Schlüsselrohling in Richtung der Schlüssellängsachse vorgeschoben, so dass in einem Arbeitsgang eine Breitseitenfläche des Schlüsselrohlings bearbeitet wird. Nach diesem ersten Bearbeitungsschritt wird der Schlüssel bspw. mit Hilfe eines Greifarmes aus der Spannvorrichtung genommen und in dieselbe oder eine zweite Spannvorrichtung eingelegt, in der diesmal die bereits profilierte Breitseitenfläche des Schlüsselschaftes zur Stützfläche der Spannvorrichtung weist, so dass die zweite, bislang nicht profilierte Schlüsselbreitseite frei liegt. Diese wird nun in gleicher Weise mit demselben Fräskopf gefräst. Die Fräserwelle des Fräsers ist um denselben Winkel zur Breitseitenebene des Rohlings geneigt. Anschließend werden in die Schlüsselbreitseite die das Schließgeheimnis des Schlüssels repräsentierenden Codierungsaussparungen eingebracht, wobei sich diese Bohrmulden über den gesamten Bereich des Schlüsselschaftes reihenförmig erstrecken können. Bevorzugt besitzt mindestens eine der Nuten eine hinterschnittene Nutwand. Variierungsnuten sind bevorzugt hinterschneidungsfrei. Mit diesen Variierungsnuten kann eine Schließhierarchie aufgebaut werden bzw. können Schließanlagen voneinander unterschieden werden. Je nach Schließanlage besitzen die zugehörigen Schlüssel eine bestimmte Variierungsnut-Variierungsrippenkombination. Über die Variierungsnuten bzw. Variierungsrippen kann auch eine Schließhierarchie aufgebaut werden. Der Neigungswinkel, den die Fräserwelle gegenüber einer Breitseitenebene besitzt, liegt bevorzugt zwischen 5° und 50°. Besonders bevorzugt liegt dieser Winkel zwischen 10° und 40°. Eine Trockenbearbeitung der Profile des Schlüssels ist möglich, wenn die Flankenwinkel der Fräszahnrippen Winkel aufweisen, die größer als 90°, bevorzugt größer als 92°, sind.

Die Erfindung betrifft darüber hinaus die Weiterbildung eines Wendeflachschlüssel. Es handelt sich dabei um eine Fertigungsvorschrift für Schlüssel einer Schließanlage, wobei die Schließhierarchie durch die Variierung des Schlüsselprofils mitgestaltet ist. Die Variierung des Schlüsselprofils kann aber auch verwendet werden, um verschiedene Schließanlagen voneinander zu unterscheiden. Die erfindungsgemäße Variierungsvorschrift für Wendeflachschlüssel sieht vor, dass die Nutflanken der Nuten jeweils einer Nut in Richtung des Nutgrundes konvergieren. Eine der Nutflanken ist hinterschnitten. Die dieser hinterschnittenen Nutflanke zugeordnete Rippe ist eine Führungsrippe, die von der Profilvariation im Wesentlichen unbeeinflusst gelassen wird. Jede der beiden gegenüberliegenden Breitseiten besitzt zwei parallel zueinander verlaufende Hälften. Eine der Hälften bildet die hinterschnittene Führungsrippe aus, wobei die hinterschnittene Rippenwandung zur nahen Schlüsselschmalseite weist. Die andere Hälfte der Breitseite bildet eine Variierungszone. Erfindungsgemäß verläuft die Variierungszone im Querschnitt auf einer bogenförmig verlaufenden Variierungsgrundlinie. Diese Grundlinie bildet die Basis aus, auf der eine Profilvariation aufgebaut wird. Ausgehend von dieser gewölbten Grundfläche werden Variierungsrippen über die Variierungsgrundfläche aufgebaut oder Variierungsnuten in die Variierungsgrundfläche eingebracht. Die Variierungszone liegt beim Wendeflachschlüssel der Führungszone gegenüber.

Der Wendeflachschlüssel kann neben den Breitseitenaussparungen zur Codierung auch auf der Schlüsselschmalseite Aussparungen in Form von Ergänzungsprofilausnehmungen aufweisen. Darüber hinaus ist es bevorzugt vorgesehen, dass die über die Breitseiten erhabene Führungsrippe mit Ergänzungsprofilausnehmungen versehen ist, die insbesondere in den Bereich der hinterschnittenen Flanke eingeschnitten oder eingebohrt sind. Bevorzugt erstrecken sich diese Ergänzungsprofilausnehmungen über den spitzwinkligen Kantenverlauf der hinterschnittenen Flanke zur Kopffläche. Diese Ergänzungsprofilausnehmungen, die sich an einer oder beiden Schlüsselschmalseiten oder aber auch an der Führungsrippe befinden können, werden im zugehörigen Schließzylinder von gesonderten Tastelementen abgefragt. Sind die Aussparungen nicht vorhanden, so kann der Zylinderkern des Schließzylinders nicht entsperrt werden.

Ein Ausführungsbeispiel der Erfindung wird nachfolgend anhand beigefügter Zeichnungen erläutert. Es zeigen:
- Fig. 1: grobschematisch die räumliche Anordnung eines eingespannten Schlüsselrohlings in Bezug auf den eine Breitseite 3 bearbeitenden Fräser 17,
- Fig. 2: eine Darstellung gemäß Fig. 1, jedoch zur Fertigung der zweiten Schlüsselbreitseite 3',
- Fig. 3: einen Querschnitt durch ein Grundprofil, das wie dargestellt nicht Teil der Erfindung ist,
- Fig. 4: eine erste Profilvariation aufbauend auf dem in Fig. 3 dargestellten Grundprofil und
- Fig. 5: eine weitere Profilvariation aufbauend auf dem in Fig. 3 dargestellten Grundprofil.

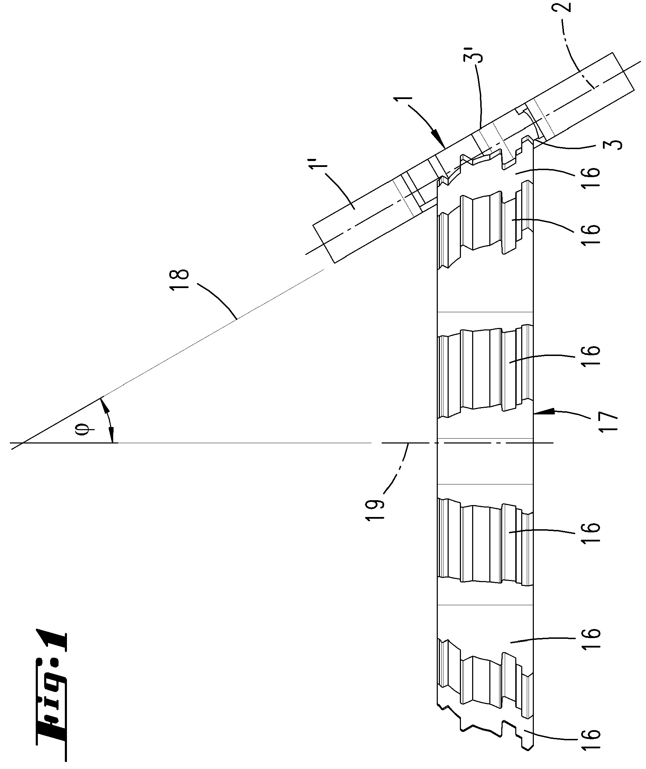

Die Fig. 1 zeigt die räumliche Beziehung zwischen dem Schlüsselrohling 1 und dem Fräser 17. Der Schlüsselrohling, der einen Schlüsselschaft mit parallelen Breitseiten 3, 3' und eine Reide 1' aufweist, ist mit nicht dargestellten Spannmitteln, bspw. mit Spannbacken, in einer Spannvorrichtung gehalten. Die beiden Schlüsselbreitseitenebenen 3, 3', die parallel zur Längsmittelebene 2 des Schlüsselrohlings verlaufen, definieren eine Bezugsebene. Die Wellenachse 19, um die ein Profilfräser 17 gedreht wird, ist um einen Winkel ϕ zur Längsmittelebene 2 des Schlüsselrohlings 1 geneigt. Beim Ausführungsbeispiel liegt der Neigungswinkel ϕ bei etwa 30°.

Der Fräser 17 besitzt eine Umfangsfläche, die im Wesentlichen auf einer Kegelmantelfläche 18 verläuft, wobei der Kegelöffnungswinkel dem Neigungswinkel ϕ entspricht. Dies hat zur Folge, dass eine durch die Kegelmantelfläche 18 im Bereich des Zahneingriffs in die Breitseitenebene des Schlüsselrohlings 1 gezogene Linie parallel zur Schlüsselrohlingsbreitseitenebene verläuft. Auf seiner Umfangsfläche besitzt der Fräser 17 eine Vielzahl von Fräszähnen 16, die Fräszahnrippen und Fräszahnnuten aufweisen, die ein komplementäres Profil zu den zu erzeugenden Nuten 4, 5, 6, 12 bzw. Rippen 8, 9, 11 des Schlüssels aufweisen.

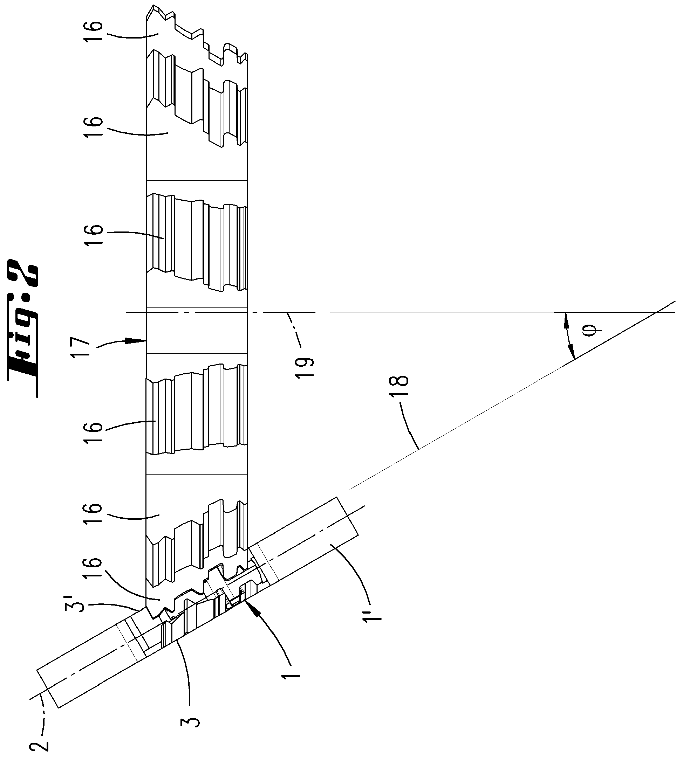

Zur Profilierung einer der beiden voneinander wegweisenden Breitseiten 3, 3' des Schlüsselrohlings wird der um die Wellenachse 19 drehangetriebene Fräser 17 zugestellt. In der Darstellung gemäß Fig. 1 entspricht die Zustellrichtung einer Verlagerung des Fräsers 17 senkrecht zur Wellenachse 19 nach rechts, bezogen auf die Fig. 2 nach links. Anschließend wird entweder der Fräser 17 oder der Schlüsselrohling 1 bzw. die den Schlüsselrohling 1 fesselnde Spannvorrichtung in Erstreckungsrichtung des Schlüsselschaftes verlagert. In den Darstellungen gemäß Figuren 1 und 2 erfolgt diese Verlagerung senkrecht zur Papierebene.

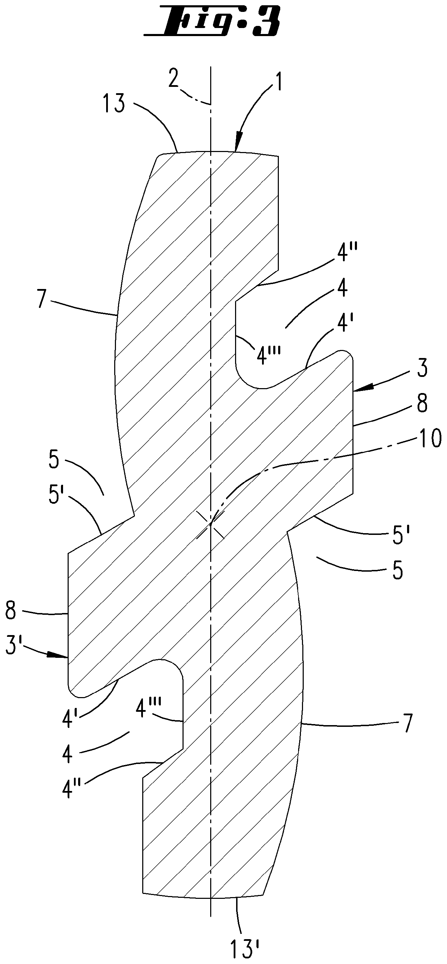

Nachdem in der in Fig. 1 dargestellten Aufspannung die erste Schlüsselbreitseite 3 gefertigt worden ist, wird der Schlüsselrohling 1 um 180° um die Längsmittelachse 10 gedreht und erneut eingespannt (Einspannstellung Fig. 2). Mit dem Fräser 17 wird jetzt die gegenüberliegende Breitseite 3' profiliert, so dass ein Profil entsteht, wie es etwa in den Figuren 3 bis 5 dargestellt ist.

Schließanlagen besitzen verschiedene Hierarchieebenen sowie in der Hierarchie gleiche Gruppen. Mit einem Generalhauptschlüssel können sämtliche Schließzylinder sämtlicher Gruppen einer Schließanlage geschlossen werden. Mit einem Gruppenschlüssel ist es hingegen nur möglich, sämtliche Schließzylinder der zugehörigen Gruppe zu schließen. Da es nur eine begrenzte Anzahl möglicher Stiftkombinationen gibt, werden Schließzylinder unterschiedlicher Gruppen durch unterschiedliche Nut-/Rippenprofilierungen voneinander unterschieden. Beispielsweise besitzt ein Schlüssel einer speziellen Gruppe eine spezielle Variierungsrippe und sämtliche Schließzylinder dieser Gruppe einen Schlüsselkanal, der eine zu dieser Variierungsrippe korrespondierende Variierungsnut aufweist. Die Schließzylinder aller anderen Gruppen besitzen diese Variierungsnut nicht. Diese besitzen aber individuelle andere Variierungsnuten, die zu einer gruppenspezifischen Variierungsrippe korrespondieren, die jeder dieser Gruppe zugehörige Schlüssel aufweist. Zufolge dieser Ausgestaltung können Schließzylinder verschiedener Gruppen gleich gestaltete Stiftzuhaltungskombinationen besitzen. Wegen der verschiedenartigen Rippenprofile ist aber eine Überschließung ausgeschlossen. Über Variierungsnuten im Schlüsselprofil können Schließanlagen voneinander unterschieden werden. Alle Schlüssel, die zu einer Schließanlage gehören, besitzen dann diese Variierungsnut. Die Schlüsselkanäle der zugehörigen Schließzylinder haben dann an ihren Seitenwänden jeweils eine zu dieser Variierungsnut korrespondierende Variierungsrippe, so dass Schlüssel, die diese Variierungsnut nicht haben, in die Schließzylinder nicht eingeschoben werden können.

Die Fig. 3 zeigt ein Basisprofil, welches der Ausgangspunkt für die Erstellung einer Profilvariation für eine oder mehrere Schließanlagen ist. Dieses Basisprofil besitzt eine erste Nut 4, bei der es sich um eine Führungsnut handelt, und in die eine Rippe der Wandung des zugehörigen Schlüsselkanals eingreifen kann. Bei dem Basisprofil handelt es sich um ein Wendeschlüsselprofil. Die beiden voneinander wegweisenden Breitseiten 3, 3' des Schlüssels haben einen Profilverlauf, der bezogen auf die Längsmittelachse 10 punktsymmetrisch verläuft. Auf jeder der beiden Breitseiten 3, 3' befindet sich ein Führungsabschnitt, der von der Hälfte der jeweiligen Breitseite 3, 3' ausgebildet wird, in dem die Führungsnut 4 angeordnet ist. Der Führungsnut 4 liegt eine Führungsrippe 8 benachbart.

Das Schlüsselprofil 1 besitzt zwei voneinander wegweisende Schmalseiten 13, 13'. Die Führungsnut 4 der Breitseite 3 besitzt eine Nutflanke 4', die bezogen auf die Breitseitenebene des profilierten Schlüssels, die durch die Kopffläche der Rippe 8, in einem Winkel verläuft, der kleiner als 90° ist. Im Ausführungsbeispiel liegt der Winkel bei etwa 60°. Die Führungsnut 4 besitzt einen Nutboden 4"', der parallel zur Schlüssellängsmittelebene 2 bzw. parallel zur Schlüsselbreitseitenebene verläuft. Die der Nutflanke 4' gegenüberliegende Nutflanke 4" verläuft in einem Winkel von <90° zur Schlüsselbreitseitenebene. Die Nutflanken 4', 4" können parallel zueinander verlaufen. Im Ausführungsbeispiel verlaufen sie jedoch mit einem geringen Winkel zueinander und konvergieren in Richtung zum Nutgrund 4"'.

Die hinterschnittene Nutflanke 4', die gleichzeitig die Rippenflanke der Führungsrippe 8 ausbildet, weist in Richtung der Schmalseite 13. Die zur gegenüberliegenden Schmalseite 13' hinweisende Flanke 5' der Rippe 8 verläuft etwa parallel zur Nutflanke 4". Die Flanke 5' bildet ebenfalls eine Nutflanke aus. Es handelt sich hierbei um eine Variierungsnut 5, die beim Basisprofil nur eine Nutwand 5' besitzt. Die hinterschnittene Führungsrippenflanke 4' bleibt bei allen Profilvariationen unverändert.

Die Variierungszone des Schlüsselprofils besitzt eine gewölbte Basiskonturlinie 7, die einem gewölbten Breitseitenabschnitt entspricht. Es handelt sich dabei um einen Abschnitt einer Zylinderaußenmantelwand, wobei die Achse des diese gewölbte Fläche definierenden Zylinders parallel zur Längsmittelachse 10 verläuft.

Variierungszone und Führungszone sind derart einander zugeordnet, dass der Führungsnut 4 die gewölbte Variierungsbasisfläche 7 gegenüberliegt. Zufolge der punktsymmetrischen Gestaltung des Schlüsselprofils weist die hinterschnittene Nutflanke 4' bzw. Rippenflanke 4' zur Schmalseite 13'. Die zu dieser Führungsrippenflanke 4' wegweisende Rippenflanke 5' weist zur Variierungszone, also zur Schmalseite 13.

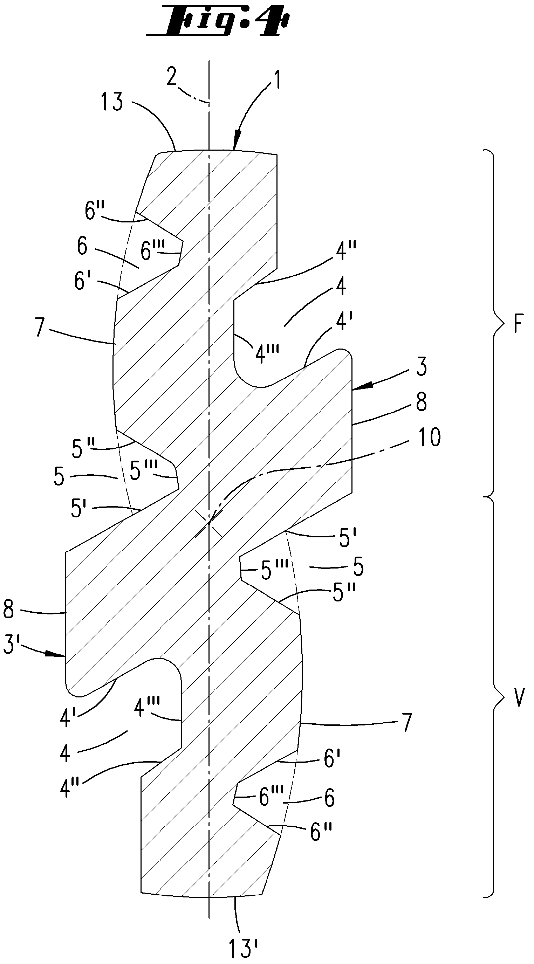

Die Fig. 4 zeigt eine erste, zur Verdeutlichung komplexere Profilvariation ausgehend von dem in der Fig. 3 dargestellten Basisprofil. Der Variierungsabschnitt V, der dem Führungsabschnitt F der jeweils anderen Schlüsselbreitseite gegenüberliegt, besitzt hier zwei zusätzliche Variierungsnuten 5, 6, die mit dem Verfahren gemäß Fig. 1 und 2 gefertigt sind. Die Variierungsnuten 5, 6 besitzen V-förmig zueinander verlaufende Nutflanken 6', 6", 5', 5", wobei sämtliche Nutflanken 5', 5", 6', 6" nicht hinterschnitten sind, also einen Winkel zur Schlüsselbreitseite aufweisen, der deutlich größer als 90° ist. Die Nutgründe 5"', 6"' verlaufen hier nicht parallel zur Längsmittelebene 2.

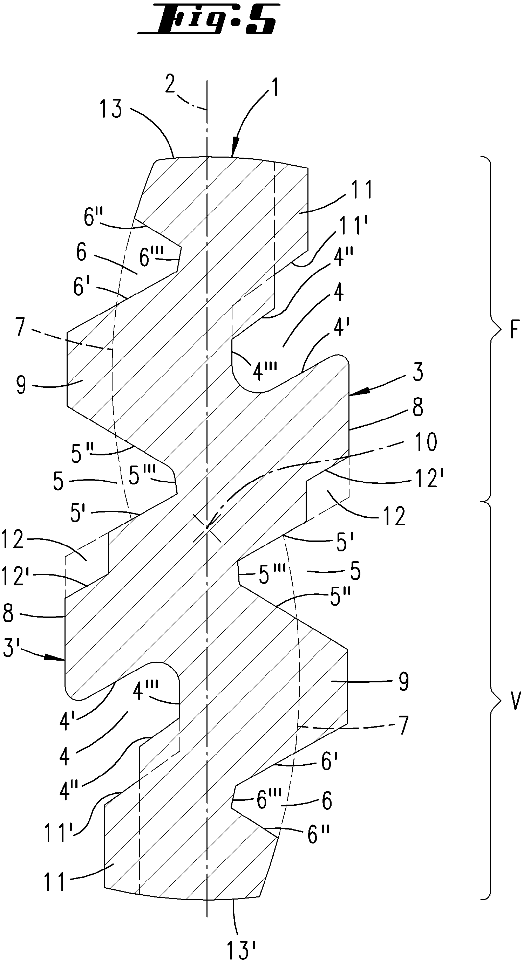

Die Fig. 5 zeigt eine weitere, noch komplexere Profilvariation, die ebenfalls auf dem in der Fig. 3 dargestellten Grundprofil aufbaut. Bei diesem Profil erstreckt sich im Variierungsbereich eine zusätzliche Variierungsrippe 9 im Zwischenbereich zwischen den Variierungsnuten 5 und 6, wobei die Rippe 9 so angeordnet ist, dass die Rippenflanken 5", 6' bis in den Nutgrund 5"' bzw. 6"' verlaufen.

Im Bereich der Führungsrippe 8 ist eine einseitig offene Variierungsnut 12 vorgesehen, deren Nutflanke 12' parallel zur hinterschnittenen Rippenflanke 4' bzw. zur nicht hinterschnittenen Rippenflanke 5' verläuft. Die Nut 12 wird von einem parallelogrammartigen Ausschnitt des Eckbereichs der Führungsrippe 8 ausgebildet.

Die Führungsnut 4 ist um eine parallelogrammartig auf dem Basisprofil aufbauende Rippe ergänzt worden, so dass die Nutflanke 4" näher an der Nutflanke 4' liegt.

Es ist eine weitere Variierungsrippe 11 vorgesehen, die im Führungsbereich F angeordnet ist, wobei die Rippenflanke 11' eine Verlängerung der Nutflanke 4" des in Fig. 3 dargestellten Basisprofils ist.

### Bezugszeichenliste

- 1: Schlüssel
- 2: Schlüssellängsmittelebene
- 3: Breitseite
- 4: Nut, Nutflanke
- 5: Nut, Nutflanke
- 6: Nut, Nutflanke
- 7: gewölbter Breitseitenabschnitt
- 8: Führungsrippe
- 9: Rippe
- 10: Längsmittelachse
- 11: Rippe
- 12: Nut
- 13: Schmalseite
- 14: ---
- 15: ---
- 16: Fräszahn
- 17: Fräser
- 18: Kegelmantelfläche
- 19: Wellenachse

## Patentansprüche

1. Verfahren zum Profilieren der Breitseiten (3, 3') eines Wendeflachschlüssels, **dadurch gekennzeichnet, dass** ein Schlüsselrohling (1) in einer Spannvorrichtung derart eingespannt wird, dass seine erste Breitseite (3) frei liegt, wobei mit einem sich um eine Fräserwelle (19) drehenden, auf seiner Umfangsfläche Fräszähne (16) aufweisenden Fräser (17) durch Vorschub in Schlüssellängsrichtung zum Längsschnittprofil der Fräszähne (16) komplementäre Nuten (4, 5, 6, 12) und Rippen (8, 9, 11) eingefräst werden und danach der Schlüsselrohling (1) in einer um die Schlüssellängsmittelachse (10) um 180° gedrehten Stellung derart eingespannt wird, dass seine zweite Breitseite (3') frei liegt, und mit demselben Fräser (17) durch Vorschub in Schlüssellängsrichtung zum Längsschnittprofil der Fräszähne (16) komplementäre Nuten (4, 5, 6, 12) und Rippen (8, 9,11) in die Breitseite (3') eingefräst werden, wobei die Fräserwellenachse zur Längsmittelebene (2) des Schlüssels (1) um einen Neigungswinkel (ϕ) geneigt ist, wobei zumindest eine Fräszahnrippe der Fräszähne (16) eine hinterschnittene Führungswand (4') erzeugt.

2. Verfahren nach Anspruch 1, **dadurch gekennzeichnet, dass** der Neigungswinkel (ϕ) zwischen 5° und 50°, bevorzugt zwischen 10° und 40° liegt.

3. Wendeflachschlüssel mit einem nach einem Verfahren gemäß Anspruch 1 oder 2 gefertigten Basisprofil, der einen eine erste Breitseite (3) und eine dieser gegenüberliegende zweite Breitseite (3') aufweisenden Schlüsselbart besitzt, wobei die beiden Breitseiten (3, 3') bezogen auf eine Schlüssellängsmittelachse (10) im Querschnitt punktsymmetrisch verlaufende Nuten (4, 5, 6,12) und Rippen (8, 9,11) ausbilden, wobei die Nutflanken (4', 4", 5', 5", 6', 6") jeweils einer Nut (4, 5, 6) in Richtung des Nutgrundes (4"', 5"', 6"') konvergieren, wobei die Flanke (4') mindestens einer Nut (4) eine hinterschnittene Flanke einer Führungsrippe (8) ausbildet, **dadurch gekennzeichnet, dass** die Führungsrippe (8) einer im Querschnitt auf einer bogenförmig verlaufenden Variierungsgrundlinie (7) verlaufenden Variierungszone (V) gegenüberliegt, von welcher Variierungsgrundlinie (7) zur Variierung des Schlüsselprofils Variierungsnuten (5, 6) bzw. Variierungsrippen (9) ausgehen.

4. Wendeflachschlüssel nach Anspruch 3, **dadurch gekennzeichnet, dass** die Variierungsnut(en) (5, 6) bzw. die Variierungsrippe(n) (7) hinterschneidungsfreie Flanken (5', 5", 6', 6", 12') aufweisen.

5. Wendeflachschlüssel nach einem der Ansprüche 3 oder 4, **dadurch gekennzeichnet, dass** die Flanke (4') die Flanke einer Führungsrippe (8) ist, die bei einer Profilvariation unverändert bleibt.

6. Wendeflachschlüssel nach Anspruch 3, 4 oder 5, **dadurch gekennzeichnet, dass** die Schlüsselschmalseite (13,13') ein oder mehrere Ergänzungsprofilausnehmungen aufweist.

7. Wendeflachschlüssel nach einem der vorhergehenden Ansprüche 3 bis 6, **dadurch gekennzeichnet, dass** die Führungsrippe (8), insbesondere deren hinterschnittene Flanke (4') ein oder mehrere Ergänzungsprofilausnehmungen aufweist.

## Claims

1. Method for profiling the broad sides (3, 3') of a flat reversible key, **characterized in that** a key blank (1) is clamped in a clamping device in such a way that the first broad side (3) of the key blank is exposed, complementary grooves (4, 5, 6, 12) and ribs (8, 9, 11) being milled using a milling cutter (17) that has cutter teeth (16) on its peripheral surface and rotates about a cutter shaft (19), by advance in the longitudinal direction of the key with respect to the longitudinal section profile of the cutter teeth (16), and the key blank (1) then being clamped in a position which is turned by 180° about the longitudinal centre axis (10) of the key in such a way that the second broad side (3') of the key blank is exposed, and complementary grooves (4, 5, 6, 12) and ribs (8, 9, 11) being milled into the broad side (3'), using the same milling cutter (17), by advance in the longitudinal direction of the key with respect to the longitudinal section profile of the cutter teeth (16), the axis of the cutter shaft being inclined at an angle of inclination (ϕ) relative to the longitudinal centre plane (2) of the key (1), at least one cutter tooth rib of the cutter teeth (16) producing an undercut guide wall (4').

2. Method according to Claim 1, **characterized in that** the angle of inclination (ϕ) is between 5° and 50°, preferably between 10° and 40°.

3. Flat reversible key comprising a base profile produced by a method according to Claim 1 or 2, the base profile having a key bit which has a first broad side (3) and a second broad side (3') situated opposite therefrom, the two broad sides (3, 3') forming grooves (4, 5, 6, 12) and ribs (8, 9, 11) which extend symmetrically, in the cross-section, about a single point, relative to a longitudinal central axis (10) of the key, the groove flanks (4', 4", 5', 5", 6', 6") of each respective groove (4, 5, 6) converging in the direction of the groove base (4"', 5"', 6'"), the flank (4') of at least one groove (4) forming an undercut flank of a guide rib (8), **characterized in that** the guide rib (8) is situated opposite from a variation zone (V), the cross-section of which extends on an arc-shaped variation base line (7), the variation grooves (5, 6) or variation ribs (7) starting from this variation base line (7) in order to vary the key profile.

4. Flat reversible key according to Claim 3, **characterized in that** the variation groove(s) (5, 6) or the variation ribs(s) (7) has/have flanks (5', 5", 6', 6", 12') with no undercuts.

5. Flat reversible key according to either of Claims 3 or 4, **characterized in that** the flank (4') is the flank of a guide rib (8), which remains unchanged in a profile variation.

6. Flat reversible key according to Claim 3, 4 or 5, **characterized in that** the narrow side (13, 13') of the key has one or more supplemental profile recesses.

7. Flat reversible key according to any of the preceding Claims 3 to 6, **characterized in that** the guide rib (8), in particular the undercut flank (4') thereof, has one or more supplemental profile recesses.

## Revendications

1. Procédé de profilage des faces larges (3, 3') d'une clé plate réversible, **caractérisé en ce qu'**une ébauche de clé (1) est maintenue dans un dispositif de serrage de manière à ce que sa première face large (3) soit libre, dans lequel sont fraisées avec une fraise (17) présentant des dents de coupe (16) sur sa surface périphérique et tournant autour d'un arbre de fraise (19), des rainures (4, 5, 6, 12) et nervures (8, 9, 11) complémentaires au profil de coupe longitudinal des dents de coupe (16) par avance vers la direction longitudinale de la clé et que l'ébauche de clé (1) est ensuite maintenue dans une position tournée de 180° par rapport à son axe médian longitudinal (10) de manière à ce que sa deuxième face large (3') soit libre et que des rainures (4, 5, 6, 12) et nervures (8, 9, 11) complémentaires au profil de coupe longitudinal des dents de coupe (16) sont fraisées dans la face large (3') avec la même fraise (17) par avance vers la direction longitudinale de la clé, dans lequel l'axe de l'arbre de fraise est incliné par rapport au plan médian longitudinal (2) de la clé (1) d'un angle d'inclinaison (ϕ), au moins une arête des dents de coupe (16) générant une paroi de guidage en contre-dépouille (4').

2. Procédé selon la revendication 1, **caractérisé en ce que** l'angle d'inclinaison (ϕ) est compris entre 5 ° et 50 °, de préférence entre 10 ° et 40.

3. Clé plate réversible ayant un profil de base obtenu avec un procédé selon la revendication 1 ou 2, présentant un panneton ayant une première face large (3) et une deuxième face large (3') qui lui est opposée, dans laquelle les deux faces larges (3, 3') forment des rainures (4, 5, 6, 12) et des nervures (8, 9, 11) qui s'étendent en symétrie ponctuelle en coupe transversale par rapport à un axe médian longitudinal (10) de la clé, dans laquelle les flancs (4', 4", 5', 5", 6', 6") d'une rainure (4, 5, 6) convergent à chaque fois en direction du fond de la rainure (4"', 5"', 6"'), dans laquelle le flanc (4') d'au moins une rainure (4) forme un flanc en contre-dépouille d'un nervure de guidage (8), **caractérisé en ce que** la nervure de guidage (8) est en coupe transversale à l'opposé d'une zone de variation (V) s'étendant sur une ligne de référence qui est arquée à partir de laquelle s'étendent des rainures de variation (5, 6), respectivement des nervures de variation (9) pour varier le profil de clé.

4. Clé plate réversible selon la revendication 3, **caractérisé en ce que** la(les) rainure(s) de variation (5, 6), respectivement la(les) nervure(s) de variation (7) présentent des flancs sans contre-dépouille (5', 5", 6', 6", 12').

5. Clé plate réversible selon la revendication 3 ou 4, **caractérisé en ce que** le flanc (4') est le flanc d'une nervure de guidage (8) qui reste inchangé lors d'une variation de profil.

6. Clé plate réversible selon la revendication 3, 4 ou 5, **caractérisé en ce que** le côté étroit de la clé (13, 13') présente un ou plusieurs creux de profil supplémentaires.

7. Clé plate réversible selon l'une quelconque des revendications 3 à 6, **caractérisé en ce que** la nervure de guidage (8), en particulier son flanc en contre-dépouille (4') présente un ou plusieurs creux de profil supplémentaires.
